# EUROPÄISCHE PATENTANMELDUNG

(11) **EP 3 984 663 A1**
(43) Veröffentlichungstag der Anmeldung: **20.04.2022**
(21) Anmeldenummer: 20202429.5
(22) Anmeldetag: 16.10.2020
(51) Int. Cl.: B21C 47/00, C25D 3/00, B32B 3/08, B32B 3/26, B32B 7/02, B32B 7/05, B32B 15/04, B32B 15/20, C22C 9/00

(54) **METALLBAND UND VERFAHREN ZUR HERSTELLUNG SOLCH EINES METALLBANDS**

(71) Anmelder: Voestalpine Precision Strip GmbH, 3333 Böhlerwerk (AT)
(72) Erfinder: Gegenhuber, Robert E., 4540 Bad Hall (AT)
(74) Vertreter: Jell, Friedrich

(57) **Zusammenfassung**

Es wird ein Metallband (1, 101, 201) und ein Verfahren zur Herstellung solch eines Metallbands (1, 101, 201) gezeigt. Um reproduzierbar ein standfestes Metallband (1, 101, 201) herstellen zu können, wird vorgeschlagen, dass sich die Stumpfnaht (5) im Wesentlichen zwischen der ersten Plattierschicht (3b) des ersten Bandquerabschnitts (2a) und dem zweiten Bandquerabschnitt (2b) erstreckt.

## Beschreibung

Die Erfindung betrifft ein Metallband und ein Verfahren zur Herstellung solch eines Metallbands.

Zur Herstellung eines hybriden Metallbands für elektrotechnische Anwendungen aus zwei miteinander längsverbundenen Metallbändern aus voneinander unterschiedlichen Basismetallen - beispielsweise Aluminium und Kupfer - ist es bekannt, die beiden Metallbänder längsseitig stumpf aneinander zu schweißen.
Dabei kommt es zur Entstehung von nachteiligen intermetallischen Phasen aus der Schmelze, welche die Standfestigkeit bzw. die Qualität der Schweißverbindung verschlechtern und damit auch die mechanische Zuverlässigkeit des Metallbands bei dessen Weiterverarbeitung gefährden. Zudem verringern diese intermetallischen Phasen im Gefüge die elektrische Leitfähigkeit, was die Verwendung des Metallbands zur Herstellung von elektrischen leitfähigen Bauteilen reduziert. Ebenso zeigen diese Bauteile eine verminderte Dauerbelastbarkeit.

Um die Bildung von solchen nachteiligen intermetallischen Phasen, so gering wie möglich zu halten, sind aufwendige Schweißmethoden, wie beispielsweise Ultraschallschweißverfahren oder Rührreibschweißverfahren bekannt. Solche Verfahren sind jedoch für ein kontinuierliches Herstellverfahren nicht geeignet.

Alternativ zum Schweißen ist es auch bekannt, Metallbändern mit voneinander unterschiedlichen Basismetallen mithilfe eines Plattierverfahrens miteinander stoffschlüssig zu verbinden. Nachteilig ist das Walzplattieren hinsichtlich der Festigkeit der Fügepartner beschränkt - insbesondere ist es nicht bzw. nahezu nicht möglich, ein Metallband aus Kupfer bzw. einer Kupferlegierung mit einer Zugfestigkeit (Rₘ) ≥ 360 MPa zu plattieren, sodass für diese Metallbänder auf eine Schweißverbindung -mit allen Nachteilen im Schweißbereich- zurückgegriffen werden muss.

Die Erfindung hat sich daher die Aufgabe gestellt, ein eingangs geschildertes Metallband aus zwei meiteinander längsverbundenen Metallbändern mit voneinander unterschiedlichen Basismetallen derart zu verändern, dass dieses ohne Beschränkung in der Festigkeit eine vergleichsweise hohe mechanische Standfestigkeit und/oder hohe elektrische Leitfähigkeit erreichen kann.
Außerdem ist es die Aufgabe der Erfindung, ein reproduzierbares, einfaches und/oder kostengünstiges Verfahren zur Herstellung solch eines Metallbands bereitzustellen.

Die Erfindung löst die gestellte Aufgabe hinsichtlich des Metallbands durch die Merkmale des Anspruchs 1.

Weist das erste Metallband eine erste, zumindest entlang einer Längskante auf der ersten Grundschicht vorgesehene Plattierschicht aus Kupfer oder aus einer Kupferlegierung auf, kann zwischen dem ersten Bandquerabschnitt, der eine erste Grundschicht aus Aluminium oder aus einer Aluminiumlegierung aufweist, und dem zweiten Bandquerabschnitt, der eine zweite Grundschicht aus Kupfer oder aus einer Kupferlegierung mit einer Festigkeit > 360 MPa aufweist, eine mechanisch und/oder elektrisch zuverlässige stoffschlüssige Verbindung garantiert werden.
Die Plattierschicht eröffnet nämlich die Möglichkeit, dass sich die Stumpfnaht im Wesentlichen zwischen der ersten Plattierschicht des ersten Bandquerabschnitts und dem zweiten Bandquerabschnitt erstreckt, wodurch keine bzw. in der Anzahl vernachlässigbare, nachteilige intermetallische Phasen in der Stumpfnaht befürchtet werden müssen. Die Strumpfnaht weist daher auch keine spröden Phasen auf, die die Festigkeit oder die elektrische Leitfähigkeit vermindern, wodurch das erfindungsgemäße Metallband sich beispielsweise für elektrische Bauteile, wie Kontakte, besonders eignen kann.
Zudem leidet das erfindungsgemäße, Metallband nicht unter einer von anderen Metallbändern bekannten reduzierten Standfestigkeit - zuverlässige Endprodukte sind daher sichergestellt. Dies insbesondere, da im zweiten Bandabschnitts eine vergleichsweise hohe Zugfestigkeit (Rₘ) ≥ 360 MPa zur Verfügung steht.
Das erfindungsgemäße Metallband, kann daher verschiedenste Eigenschaften unterschiedlicher Werkstoffgruppen standfest auf sich vereinen.

Insbesondere kann sich das Metallband für elektrische Anwendungen eignen, wenn die Aluminiumlegierung eine elektrische Leitfähigkeit von mindestens 9 MS/m (Megasiemens/m) aufweist. Vorzugsweise weist die erste Grundschicht eine elektrische Leitfähigkeit von mindestens 18 MS/m auf.

Ein Auftreten dieser nachteiligen intermetallischen Phasen kann weiter zurückgedrängt werden, wenn sich Stumpfnaht ausschließlich zwischen der ersten Plattierschicht und dem zweiten Bandquerabschnitt erstreckt. Bevorzugt erstreckt sich die Stumpfnaht ausschließlich zwischen der ersten Plattierschicht und der zweiten Grundschicht.

Vorzugsweise weist der erste Bandquerabschnitt eine erste Banddicke auf, die größer oder gleich der zweiten Banddicke des zweiten Bandquerabschnitts ist, um damit beispielsweise ein für die Weiterverbreitung individuell angepasstes Halbzeug zur Verfügung stellen zu können.

Eine Stumpfnaht mit hoher Qualität kann sich ergeben, wenn der zweite Bandquerabschnitt in seiner zweiten Banddicke kleiner gleich jener Schichtdicke der ersten Plattierschicht ist, an die der zweite Bandquerabschnitt anschließt.

Als besonders vorteilhaft kann sich herausstellen, wenn ein Dickenverhältnis von erster Banddicke des ersten Bandquerabschnitts zur zweiten Banddicke des zweiten Bandquerabschnitts von 1 : 1 bis 1 : 0,2, insbesondere von 1 : 0,6 bis 1 : 0,7, besteht.

Vorzugsweise besteht die zweite Grundschicht des zweiten Metallbands bzw. des zweiten Bandquerabschnitts aus einer aushärtbaren Kupferlegierung. Hierzu kann diese zweite Grundschicht eine CuNiSi-Basis aufweisen. Vorzugsweise besteht die zweite Grundschicht aus einer CuNi1,5Si, CuNi3Si1Mg oder CuNi2SiSn-Legierung. Alternativ ist vorstellbar, dass die zweite Grundschicht aus einer niedriglegierten Kupferlegierung besteht, nämlich beispielsweise aus einer CuFe2P-Legierung.

Auch ist vorstellbar, dass die zweite Grundschicht aus einer Cu-Sn-Legierung besteht, nämlich beispielsweise aus einer CuSn6-Legierung beispielsweise im kaltverfestigten Zustand.
Des Weiteren ist vorstellbar, dass das zweite Metallband eine anorganische Beschichtung aufweist. Diese Beschichtung ist vorzugsweise an der zweiten Grundschicht ausgebildet. Diese Beschichtung kann beispielsweise durch ein Heißverzinn-Verfahren mit beispielsweise 2 - 10 µm Zinn oder beispielsweise durch ein Galvanik-Verfahren mit beispielsweise 1 - 3 µm Ni-Flash und darauf beispielsweise 2 - 6 µm Zinn ausgebildet werden.

Weist die erste Plattierschicht eine Zugfestigkeit (Rₘ) < 420 MPa auf, kann eine standfeste stoffschlüssige Anbindung an der Grundschicht oder an einer anderen Schicht des ersten Metallbands gewährleistet werden. Dies ist insbesondere noch verbesserbar, wenn die erste Plattierschicht eine Zugfestigkeit (Rₘ) < 360 MPa aufweist.

Vorzugsweise besteht die erste Plattierschicht aus Kupfer, nämlich beispielsweise aus Kupfer mit der Werkstoffbezeichnung EN CW008A.
Alternativ ist vorstellbar, dass die erste Plattierschicht aus einer niedriglegierten Kupferlegierung besteht.
Außerdem ist eine erste Plattierschicht aus einer CuSn-Legierung, nämlich beispielsweise eine CuSn6 vorstellbar, beispielsweise im weichen/weichgeglühten Zustand.

Die Bildung von schädlichen intermetallischen Phasen kann noch weiter zurückgedrängt werden, wenn der erste Bandquerabschnitt eine gegenüber der Plattierschicht an der Längskante zurückspringende Ausnehmung aufweist. Diese Ausnehmung kann beispielsweise als Fase oder Falz ausgebildet sein.

Vorzugsweise sind die erste Plattierschicht und die erste Grundschicht walzplattiert, was eine vergleichsweise standfeste Anbindung der Plattierschicht an die Grundschicht schaffen kann.
Außerdem ist eine standfeste Schweißverbindung erreichbar, wenn die Stumpfnaht als I-Naht ausgebildet ist.

Insbesondere kann sich das erfindungsgemäße Metallband als Halbzeug oder Vormaterial eignen, um damit zumindest ein elektrisches Bauteil, beispielsweise einen elektrischen Kontakt herzustellen, beispielsweise durch ein Ausstanzverfahren.

Die Erfindung löst die gestellte Aufgabe hinsichtlich des Verfahrens zur Herstellung des Metallbands durch die Merkmale des Anspruchs 11.

Da das erste Metallband und das zweite Metallband längsseitig im Durchlauf und im Stumpfstoß miteinander verschweißt werden, indem das zweite Metallband, das im Wesentlichen an die erste Plattierschicht stumpf anschließend, an diese erste Plattierschicht angeschweißt wird, können jene, beim Schweißen unterschiedlicher Werkstoffgruppen üblicherweise entstehenden intermetallischen Phasen unterdrückt werden, welche Phasen einen schädlichen Einfluss auf die Standfestigkeit der Schweißnaht haben. Damit erhöht sich insbesondere die Reproduzierbarkeit des Verfahrens zur Herstellung des erfindungsgemäßen Metallbands. Vorzugsweise werden hierzu das erste Metallband und das zweite Metallband durchgehend miteinander verschweißt.

Diese Reproduzierbarkeit des Verfahrens ist noch verbesserbar, wenn das zweite Metallband ausschließlich an der ersten Plattierschicht stumpf anschließt - insbesondere dann, wenn die zweite Grundschicht ausschließlich an der ersten Plattierschicht stumpf anschließt.

Werden das erste Metallband und das zweite Metallband miteinander mithilfe eines Strahlschweißverfahrens verschweißt, kann dies die Reproduzierbarkeit des Verfahrens zur Herstellung eines standfesten Metallbands weiter erhöhen. Für das Strahlschweißverfahren kann sich insbesondere die Verwendung eines Lasers als vorteilhaft herausstellen. Mit diesem Laser kann eine schmale Stumpfnaht erzeugt und/oder können aufgrund der so vergleichsweise geringen Wärmeflusszonen nachteilige intermetallische Phasen weiter verringern bzw. überhaupt vermieden werden. Vorzugsweise werden die erste Plattierschicht und die erste Grundschicht walzplattiert, um reproduzierbar ein mehrschichtiges erstes Metallband mit hohem Zusammenhalt der Schichten zu schaffen.

Indem vor dem Schweißen das erste Metallband mit einer gegenüber der Plattierschicht an der Längskante zurückspringenden Ausnehmung, insbesondere einer Fase oder einem Falz, versehen wird, kann die Gefahr der Ausbildung von schädlichen intermetallischen Phasen in der Schweißnaht aufgrund einer Vermischung der ersten und zweiten Grundschicht weiter vermindert werden.

In den Figuren ist beispielsweise der Erfindungsgegenstand anhand mehrerer Ausführungsvarianten näher dargestellt. Es zeigen
Fig. 1 eine Seitenansicht auf ein Metallband nach einem ersten Ausführungsbeispiel,
Fig. 2 eine Seitenansicht auf ein Metallband nach einem zweiten Ausführungsbeispiel und
Fig. 3 eine Seitenansicht auf ein Metallband nach einem dritten Ausführungsbeispiel.

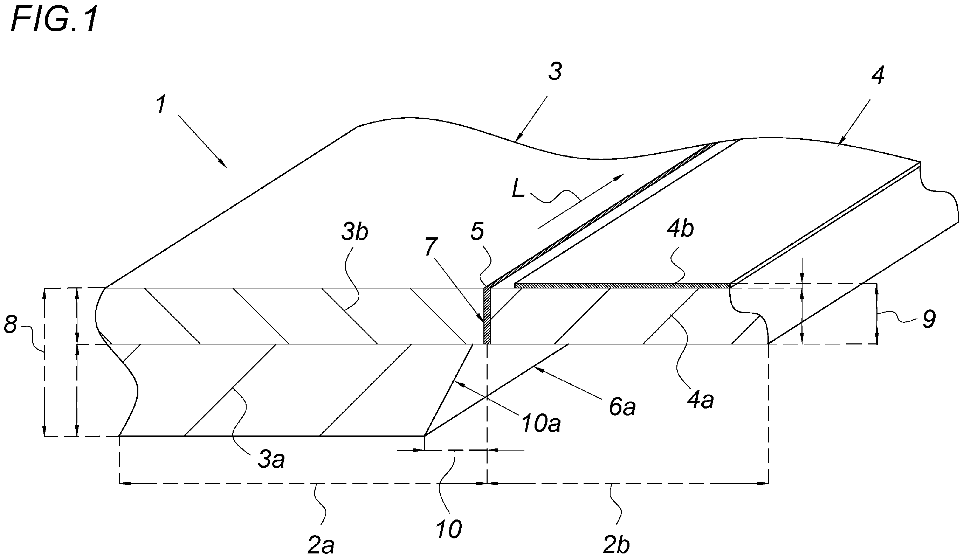

Nach Fig. 1 ist beispielsweise ein Metallband 1 nach einem ersten Ausführungsbeispiel dargestellt, das einen ersten Bandquerabschnitt 2a und einen zweiten Bandquerabschnitt 2b aufweist.
Der erste Bandquerabschnitt 2a wird von einem ersten Metallband 3, der zweite Bandquerabschnitt 2b von einem zweiten Metallband 4 gebildet, welche miteinander stoffschlüssig verbunden sind - und zwar über eine längs des Metallbands 1 verlaufende Stumpfnaht 5. Diese Stumpfnaht 5 erstreckt sich durchgehend in Längsrichtung L des Metallbands 1.

Das erste Metallband 3 weist eine erste Grundschicht 3a aus einer Aluminiumlegierung auf.
Das zweite Metallband 4 weist eine zweite Grundschicht 4a aus einer Kupferlegierung und eine Zugfestigkeit (Rₘ) ≥ 360 MPa (Zugprüfung laut Norm DIN EN ISO 6892-1) auf.

Durch diese vergleichsweise hohe Zugfestigkeit des zweiten Metallbands 4 schränkt sich ein Fügeverfahren auf ein Schweißverfahren ein - was bei den unterschiedlichen Basismetallen der Metallbänder 3, 4 zu nachteiligen intermetallischen Phasen führen würde. Solche Phasen reduzieren die Festigkeit und/oder Duktilität und/oder elektrische Leitfähigkeit der Schweißverbindung nachteilig, womit sich die Standfestigkeit des Metallbands 1 beispielsweise in Bezug auf einer Weiterverarbeitbarkeit zu einem Bauteil, vorzugsweise durch Umformen, insbesondere Tiefziehen, reduziert.

Dieser Nachteil wird erfindungsgemäß vermieden, indem das erste Metallband 3 besonders ausgebildet ist, es weist nämlich eine erste und äußere Plattierschicht 3b aus Kupfer auf.

Diese erste Plattierschicht 3b befindet sich zumindest entlang einer Längskante 6a des ersten Metallbands 3 und ist dort auf der ersten Grundschicht 3a vorgesehen. Das erste Metallband 3 ist somit an dieser Längskante 6a mehrschichtig, nämlich zweischichtig, aufgebaut, wobei eine bzw. mehrere weitere Schichten, beispielsweise eine/mehrere nicht dargestellte Zwischenschicht/en denkbar ist/sind.
In dem nach Fig. 1 dargestellten Ausführungsbeispiel bildet die erste Plattierschicht 3b außerdem eine ganzflächige Auflage auf der ersten Grundschicht 3a. Das erste Metallband 3 ist damit einseitig plattiert - wobei auch eine zweiseitige plattierte Grundschicht 3a vorstellbar ist, was in den Firguren nicht dargestellt ist.

Zunächst können durch die plattierte Fügeverbindung von erster Grundschicht 3a und erster Plattierschicht 3b -trotz deren unterschiedlichen Basismetallen- schädliche intermetallische Phasen zwischen diesen vermieden werden.
Besonders aber eröffnet die erste Plattierschicht 3b die Möglichkeit, am Metallband 1 einen zweiten Bandquerabschnitt 2b mit einer Kupferlegierung und einer Zugfestigkeit (Rₘ) ≥ 360 MPa vorzusehen. Dies, indem sich die Stumpfnaht 5 im Wesentlichen zwischen der ersten Plattierschicht 3b des ersten Bandquerabschnitts 2a und dem zweiten Bandquerabschnitt 2b erstreckt.
Damit werden nachteilige intermetallische Phasen in der Fügeverbindung zwischen den beiden Bandquerabschnitten 2a und 2b vermieden.

Außerdem vereinfacht sich durch diese erste Plattierschicht 3b auch die Herstellung des Metallbands 1 erheblich. Damit können nämlich das erste Metallband und das zweite Metallband längsseitig im Durchlauf und im Stumpfstoß 7 miteinander verschweißt werden, indem das zweite Metallband 4, das im Wesentlichen an die erste Plattierschicht 3b stumpf anschließt, an diese erste Plattierschicht 3b angeschweißt wird.
Auf diese Weise wird eine standfeste stoffschlüssige Verbindung zwischen dem ersten Metallband 3 und dem zweiten Metallband 4 erreicht, weil eine Vermischung der artfremden Basismetalle der Grundwerkstoffe 3a, 4b gering ist bzw. sogar vermieden werden kann. Dies insbesondere, wenn diese Stumpfnaht 5 als I-Naht ausgebildet ist, wie in Fig. 1 zu erkennen, und die Metallbänder 3, 4 mithilfe eines Strahlschweißverfahrens unter Verwendung eines Lasers verschweißt werden. Letzteres kann insbesondere auch die kontinuierliche Herstellung des Metallbands 1 weiter erleichtern.

Wie der Fig. 1 zu entnehmen, erstreckt sich die Stumpfnaht 5 ausschließlich zwischen der ersten Plattierschicht 3b und der zweiten Grundschicht 4a. Jene auf der zweiten Grundschicht 4a vorgesehene und optionale Beschichtung 4b wurde vor dem stoffschlüssigen Fügen im Bereich der Fügefläche entfernt.
Diese Beschichtung 4b kann beispielsweise eine 2 bis 10 µm dicke Zinnschicht sein. Andere Beschichtungen sind denkbar, beispielsweise eine galvanische Beschichtung. Zudem ist vorstellbar, dass die Beschichtung 4b mit verschweißt wird.

Eine bevorzugte Werkstoff-Kombination beim Metallband 1 ist:
Erster Bandquerabschnitt 2a bzw. erstes Metallband 3:
   - erste Grundschicht 3a aus Al 99,5 (EN AW-1050A) im Zustand H14 oder H24 mit einer elektrischen Leitfähigkeit von 34-36 MS/m.
   - erste Plattierschicht 3b aus Cu-OF (Werkstoffbezeichnung: EN CW008A) mit einer Zugfestigkeit (Rₘ) von 200 bis 280 MPa.
Zweiter Bandquerabschnitt 2b bzw. zweites Metallband 4:
   - zweite Grundschicht 4a aus CuNi3Si1Mg mit einer Zugfestigkeit (Rₘ) von 620 bis 760 MPa
   - eventuelle Beschichtung 4b, beispielsweise eine 4 µm dicke Zinkschicht.

Das Metallband 1 weist beispielsweise über alle Bandquerabschnitte 2a, 2b eine Banddicke von 0,2 bis 3,5 mm, vorteilhaft 0,4 bis 3 mm, auf. Zudem ist beispielsweise eine gesamte Bandbreite des Metallbands 1 von 10 bis 250 mm, vorteilhaft 40 von 150 mm, vorstellbar.

Das erste Metallband 3 weist eine größere erste Banddicke 8 auf, als die zweite Banddicke 9 des zweiten Metallbands 4. In der bevorzugten Werkstoff-Kombination besteht ein Dickenverhältnis von erster Banddicke 8 des ersten Bandquerabschnitts 2a zur zweiten Banddicke 9 des zweiten Bandquerabschnitts 2b von 1 : 0,73 bis 0,78.

Wie dem Ausführungsbeispiel entnommen werden kann, weist die erste Plattierschicht 3b eine Zugfestigkeit (Rₘ) < 420 MPa auf, was beispielsweise eine reproduzierbare Walzplattierung auf der ersten Grundschicht 3a ermöglicht.

Wie zudem in Fig. 1 erkennbar, ist an der Längskante 6a eine Ausnehmung 10 in Form eine Fase 10a zu erkennen. Dies Ausnehmung 10 bildet sich dadurch, dass die erste Grundschicht 3a gegenüber der ersten Plattierschicht 3b zurückspringt. Vorzugsweise wird diese Ausnehmung 10 durch ein Trennverfahren, zum Beispiel durch ein spanendes Verfahren, an der ersten Grundschicht 3a vorgesehen, bevor die beiden Metallbänder 3, 4 für das Verschweißen stumpf aneinanderstoßen.

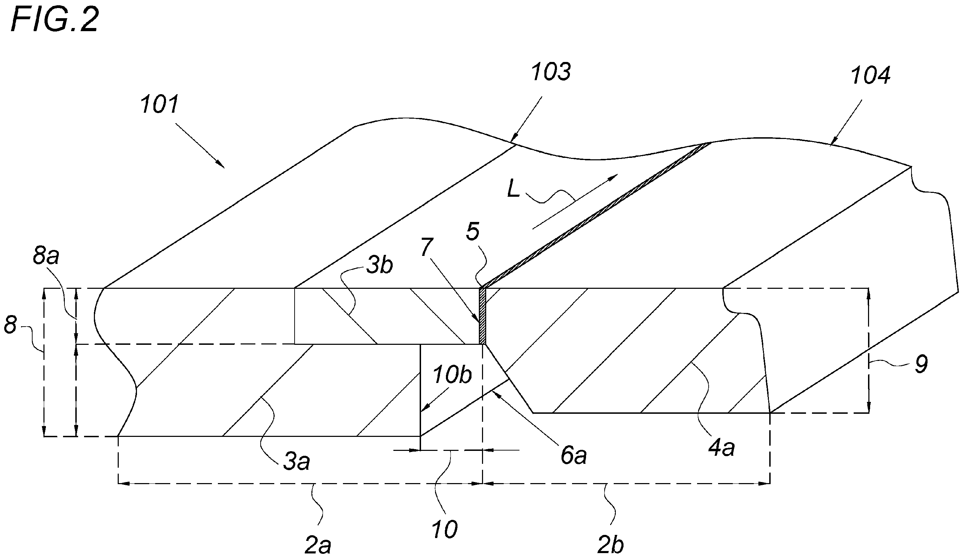

Das nach Fig. 2 dargestellte Metallband 101 nach einem zweiten Ausführungsbeispiel wird im Vergleich mit dem Metallband 101 der Fig. 1 aus anderen Metallbändern 103 und 104 hergestellt.
So ist auf der ersten Grundschicht 3a die erste Plattierschicht 3b nicht als ganzflächige Auflage, sondern in diesem Ausführungsbeispiel als Streifen plattiert, der entlang dieser Längskante 6a verläuft.
Zudem weist das zweite Metallband 104 eine Dickenvariation auf, und ist in der maximalen Banddicke 9 größer als die Schichtdicke 8a der Plattierschicht 3b. Trotzdem schließt das zweite Metallband 104, nämlich die zweite Grundschicht 4a, ausschließlich an die erste Plattierschicht 3b an. Dies insbesondere auch dadurch, weil die erste Grundschicht 3a eine Ausnehmung 10 in Form eines Falzes 10b aufweist, die gegenüber der ersten Plattierschicht 3b zurückspringt, und zwar ausgehend von dieser. Intermetallische und zumeist spröde Phasen in der Stumpfnaht 5 können so nicht entstehen, was eine hohe Standfestigkeit am Metallband 101 sicherstellt. Zudem kann diese stoffschlüssige Verbindung vorteilhafte elektrische Eigenschaften sicherstellen, was unter anderem eine signifikante Bedeutung für die Elektromobilität hat.

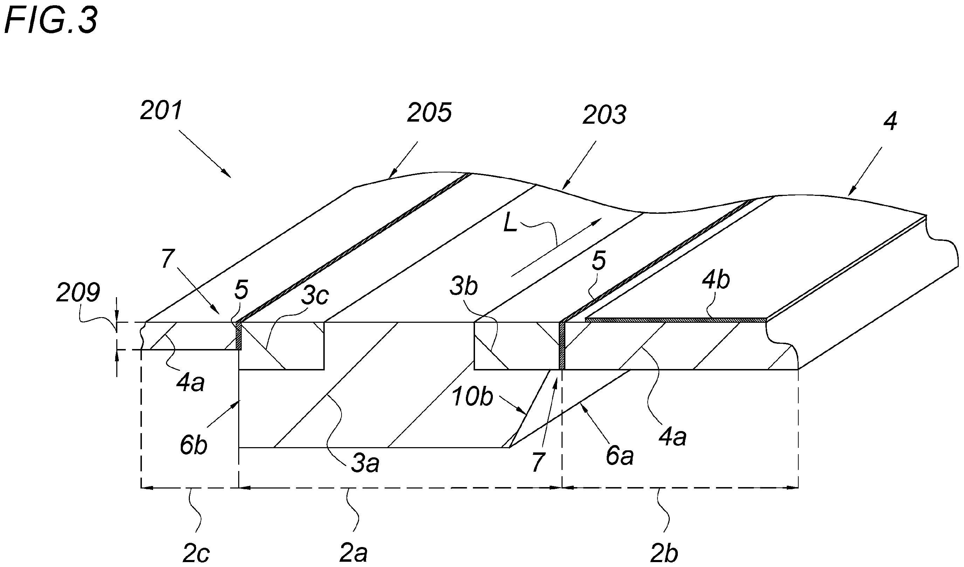

Nach dem dritten Ausführungsbeispiel laut Fig. 3 weist das Metallband 201 drei Bandquerabschnitte 2a, 2b und 2c auf. Davon besteht der erste Bandquerabschnitt 2a aus einem ersten Metallband 203 mit der ersten Plattierschicht 3b und einer zweiten Plattierschicht 3c. Die beiden beispielsweise im Werkstoff und beispielsweise in den Abmessungen gleichen Plattierschichten 3b, 3c sind auf der ersten Grundschicht 3a als Streifen plattiert, die je entlang einer der beiden parallelen Längskanten 6a, 6b des ersten Metallbands 203 verlaufen. Zusätzlich zum stumpf an die erste Plattierschicht 3b angeschweißten zweiten Metallband 4, das den zweiten Bandquerabschnitt 2b ausbildet, weist das Metallband 201 noch ein drittes Metallband 205 auf, das den dritten Bandquerabschnitt 2c ausbildet.
Das dritte Metallband 205 wird in der gleichen Art und Weise mit dem ersten Metallband 203 verbunden, wie dies auch mit dem zweiten Metallband 4 der Fall ist, bzw. wie dies bei allen Ausführungsbeispielen übergreifend der Fall ist. Das dritte Metallband 205 mit dem zum zweiten Metallband 4 gleichen zweiten Grundwerkstoff 4a ist über eine Stumpfnaht 5 an der zweiten Plattierschicht 3c angeschweißt.
Das dritte Metallband 205 ist in der Banddicke 209 kleiner als das zweite Metallband 4 - aber auch bildet sich ausschließlich eine Stumpfnaht zwischen dem dritten Metallband 205 und der Plattierschicht 3c aus, sodass intermetallische und zumeist spröde Phasen in der Stumpfnaht 5 nicht auftreten können. Ein standfestes Metallband 201 ist damit geschaffen.

Derartige Metallbänder 1, 101 und 201 sind daher besonders als Halbzeug oder Vormaterial für einen elektrischen Kontakt, beispielsweise Einpressstift etc., geeignet. Das Metallband 1, 101 und 201 wird im Stand der Technik oftmals beispielsweise als hybrides Metallband bezeichnet.

## Patentansprüche

1. Metallband mit einem ersten Bandquerabschnitt (2a) aus einem ersten Metallband (3, 103, 203), das eine erste Grundschicht (3a) aus Aluminium oder aus einer Aluminiumlegierung aufweist, und mit einem zweiten Bandquerabschnitt (2b) aus einem zweiten Metallband (4, 104), welches zweite Metallband (4, 104) eine Zugfestigkeit (Rₘ) ≥ 360 MPa, insbesondere ≥ 420 MPa, und eine zweite Grundschicht (4a) aus Kupfer oder aus einer Kupferlegierung aufweist, wobei der erste Bandquerabschnitt (2a) mit dem zweiten Bandquerabschnitt (2b) über eine längs des Metallbands (1) verlaufende Stumpfnaht (5) miteinander stoffschlüssig verbunden ist, **dadurch gekennzeichnet, dass** das erste Metallband (3, 103, 203) eine erste, zumindest entlang einer Längskante (6a, 6b) auf der ersten Grundschicht (3a) vorgesehene Plattierschicht (3b) aus Kupfer oder aus einer Kupferlegierung aufweist, und dass sich die Stumpfnaht (5) im Wesentlichen zwischen der ersten Plattierschicht (3b) des ersten Bandquerabschnitts (2a) und dem zweiten Bandquerabschnitt (2b) erstreckt.

2. Metallband nach Anspruch 1, **dadurch gekennzeichnet, dass** erste Grundschicht (3a) eine elektrische Leitfähigkeit von mindestens 9 MS/m, insbesondere mindestens 18 MS/m, aufweist.

3. Metallband nach Anspruch 1 oder 2, **dadurch gekennzeichnet, dass** sich die Stumpfnaht (5) ausschließlich zwischen der ersten Plattierschicht (3b) und dem zweiten Bandquerabschnitt (2b), insbesondere der zweiten Grundschicht (4a), erstreckt.

4. Metallband nach Anspruch 1, 2 oder 3, **dadurch gekennzeichnet, dass** der erste Bandquerabschnitt (2a) eine erste Banddicke (8) aufweist, die größer oder gleich der zweiten Banddicke (9) des zweiten Bandquerabschnitts (2b) ist.

5. Metallband nach Anspruch 4, **dadurch gekennzeichnet, dass** ein Dickenverhältnis von erster Banddicke (8) des ersten Bandquerabschnitts (2a) zur zweiten Banddicke (9) des zweiten Bandquerabschnitts (2b) von 1:1 bis 1:0,2, insbesondere von 1:0,6 bis 1:0,7, besteht.

6. Metallband nach einem der Ansprüche 1 bis 5, **dadurch gekennzeichnet, dass** die zweite Grundschicht (4a)
aus einer aushärtbaren Kupferlegierung besteht, insbesondere eine CuNiSi-Basis aufweist, beispielsweise aus einer CuNi1,5Si-Legierung, CuNi3Si1Mg-Legierung oder CuNi2SiSn-Legierung besteht, oder
aus einer niedriglegierten Kupferlegierung, insbesondere CuFe2P-Legierung, oder aus einer Cu-Sn-Legierung, insbesondere CuSn6-Legierung, besteht.

7. Metallband nach einem der Ansprüche 1 bis 6, **dadurch gekennzeichnet, dass** die erste Plattierschicht (3b) eine Zugfestigkeit (Rₘ) < 420 MPa, insbesondere < 360 MPa, aufweist.

8. Metallband nach einem der Ansprüche 1 bis 7, **dadurch gekennzeichnet, dass** die erste Plattierschicht (3b) aus Kupfer, insbesondere mit der Werkstoffbezeichnung EN CW008A, oder aus einer niedriglegierten Kupferlegierung oder aus einer Cu-Sn-Legierung, besteht.

9. Metallband nach einem der Ansprüche 1 bis 8, **dadurch gekennzeichnet, dass** der erste Bandquerabschnitt (2a) eine gegenüber der Plattierschicht (3b) an der Längskante (6a) zurückspringende Ausnehmung (10), insbesondere eine Fase (10a) oder einen Falz (10b), aufweist.

10. Metallband nach einem der Ansprüche 1 bis 9, **dadurch gekennzeichnet, dass** die erste Plattierschicht (3b) und die erste Grundschicht (3a) walzplattiert sind und/oder dass die Stumpfnaht (5) als I-Naht ausgebildet ist.

11. Halbzeug oder Vormaterial aus einem Metallband (1, 101, 201) nach einem der Ansprüche 1 bis 10 für mindestens ein elektrisches Bauteil, insbesondere einen elektrischen Kontakt.

12. Verfahren zur kontinuierlichen Herstellung eines Metallbands (1, 101, 201) nach einem der Ansprüche 1 bis 10, bei dem
das erste Metallband (3, 103, 203) mit der ersten, aus Aluminium oder aus einer Aluminiumlegierung bestehenden Grundschicht (3a) und mit der ersten Plattierschicht (3b) aus Kupfer oder aus einer Kupferlegierung, wobei die erste Plattierschicht (3b) zumindest entlang der Längskante (6a, 6b) des ersten Metallbands (3, 103, 203) auf der ersten Grundschicht (3a) vorgesehen ist,
und das zweite Metallband (4, 104) mit der Zugfestigkeit (Rₘ) ≥ 360 MPa, insbesondere ≥ 420 Mpa, und mit der zweiten, aus Kupfer oder aus einer Kupferlegierung bestehenden Grundschicht (4a),
längsseitig im Durchlauf und im Stumpfstoß miteinander verschweißt werden, indem das zweite Metallband (4, 104), das im Wesentlichen an die erste Plattierschicht (3b) stumpf anschließt, an diese erste Plattierschicht (3b) angeschweißt wird.

13. Verfahren nach Anspruch 12, **dadurch gekennzeichnet, dass** das zweite Metallband (4, 104), insbesondere die zweite Grundschicht (4a), ausschließlich an der ersten Plattierschicht (3b) stumpf anschließt.

14. Verfahren nach Anspruch 12 oder 13, **dadurch gekennzeichnet, dass** das erste Metallband (3, 103, 203) und das zweite Metallband (4, 104) mithilfe eines Strahlschweißverfahrens, vorzugsweise unter Verwendung eines Lasers, miteinander verschweißt werden.

15. Verfahren nach einem der Ansprüche 12 bis 14, **dadurch gekennzeichnet, dass** die erste Plattierschicht (3b) und die erste Grundschicht (3a) walzplattiert werden.

16. Verfahren nach einem der Ansprüche 12 bis 15, **dadurch gekennzeichnet, dass** vor dem Schweißen das erste Metallband (3, 103, 203) mit einer gegenüber der ersten Plattierschicht (3b) an der Längskante (6a) zurückspringende Ausnehmung (10), insbesondere einer Fase (10a) oder einen Falz (10b), versehen wird.
